(19) Europäisches Patentamt / European Patent Office / Office européen des brevets

(11) **EP 4 679 768 A1**

(12) **DEMANDE DE BREVET EUROPEEN**

(43) Date de publication:
**14.01.2026 Bulletin 2026/03**

(21) Numéro de dépôt: **25188348.4**

(22) Date de dépôt: **09.07.2025**

(51) Classification Internationale des Brevets (IPC):
***H04L 9/30*** *(2006.01)* ***H04L 9/32*** *(2006.01)*

(52) Classification Coopérative des Brevets (CPC):
**H04L 9/3247; H04L 9/3073; H04L 9/3218; H04L 9/3255**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **12.07.2024 FR 2407680**

(71) Demandeur: **Orange**
**92130 Issy-les-Moulineaux (FR)**

(72) Inventeurs:
- **ARFAOUI, Ghada**
  **92326 CHATILLON CEDEX (FR)**
- **JACQUES, Thibaut**
  **92326 CHATILLON (FR)**

(74) Mandataire: **Cabinet Beau de Loménie**
**103, rue de Grenelle / CS 90800**
**75340 Paris Cedex 07 (FR)**

(54) **DISPOSITIF ET PROCÉDÉ DE GÉNÉRATION DE SIGNATURES AGRÉGÉES VÉRIFIABLES LOCALEMENT POUR LA GÉNÉRATION D'ATTESTATIONS DANS UNE PLATEFORME D'ARCHITECTURE VNF-FG**

(57) Procédé de signature d'un message $m_i$, par un dispositif utilisateur, à partir d'un protocole cryptographique de preuve à divulgation nulle de connaissance défini par un élément g appartenant à un groupe $G_1$ d'ordre p, avec p désignant un nombre entier premier, et des éléments u, v, r, s, t appartenant à un groupe $G_2$, une fonction de hachage H et une période de temps courante w, comportant : une étape de génération d'une paire de clés privée et publique, la clé privée comportant un élément $\alpha_i$ sélectionné dans l'anneau Z/pZ, la clé publique comportant un premier élément et un deuxième élément étant une preuve de possession à divulgation nulle de connaissance générée à partir du protocole cryptographique, une étape de génération d'une signature $\sigma_i$ du message $m_i$ à partir de la clé privée et d'un aléa $b$, la signature comportant un premier élément $\sigma_{1i}$ et un deuxième élément $\sigma_{2i}$.

[Fig. 1]

EP 4 679 768 A1

**Description**

Domaine Technique

L'invention se rapporte au domaine général de la cryptographie et concerne plus particulièrement les procédés et dispositifs d'authentification numérique par signature électronique. Notamment, le présent exposé concerne la fourniture d'attestations collectives dans des plateformes informatiques virtualisées.

Technique antérieure

Il est connu d'utiliser des mécanismes d'attestation permettant à une cible de s'authentifier auprès d'un vérificateur en démontrant qu'il satisfait à certaines propriétés.

Classiquement, les mécanismes d'attestation prennent la forme d'un protocole dit « défi-réponse » au cours duquel le vérificateur envoie un défi à une cible accompagné d'un aléa, appelé nonce, la cible génère des preuves en réponse à ce défi et les envoie au vérificateur, généralement la preuve se fait à partir de la racine de confiance de la cible. La preuve consiste généralement à démontrer, par la fourniture d'attestation, que la cible est dans une configuration particulière, notamment dans une configuration non corrompue.

Un tel mécanisme est également connu pour attester qu'un groupe de cibles est dans une configuration particulière, digne de confiance et non corrompue. Classiquement, les messages desdites cibles sont agrégés formant ainsi un unique message prouvant l'état d'un ensemble de cibles.

Dans le cas particulier des plateformes informatiques virtualisées comportant entre autres une pluralité de machines virtuelles et un hyperviseur, non seulement les machines virtuelles mais également l'infrastructure de ces machines virtuelles doivent être attestées.

Pour ce faire, il est connu des méthodes fournissant une attestation de groupe pour l'ensemble des machines virtuelles et leur infrastructure. Classiquement, ces méthodes se fondent sur l'attribution d'une cartographie reliant les machines virtuelles et leurs hyperviseurs sous la forme d'arbre reliant des nœuds enfants à des nœuds parents. Dès réception d'une requête d'attestation, ou « défi », les nœuds enfants, génère une attestation et la transmette à leur nœud parent.

Certaines méthodes comportent la génération de rapport d'attestation sous la forme d'un booléen, par les nœuds parents, en plus de leur propre attestation, indiquant si les attestations de nœuds enfants sont valides (booléen : 1) ou si au moins une attestation de nœuds enfants est non valide (booléen : 0). Ce rapport permet au vérificateur d'obtenir rapidement une attestation globale de l'ensemble. Cela permet avantageusement de répartir les ressources en calcul en parallélisant les vérifications d'attestations. Cependant, dans le cas d'une attestation non valide, il n'est pas possible d'identifier la ou les cibles ayant fourni une attestation non valide, autrement dit d'identifier la ou les cibles qui ne sont pas dans une configuration valide, i.e. digne de confiance. Par ailleurs, cela nécessite entre autres que les nœuds parents puissent vérifier l'attestation et sachent donc ce qu'est une attestation valide pour le nœud enfant, i.e. ce qu'est une configuration valide pour ladite machine virtuelle et son hyperviseur. Cette connaissance peut être contestable, notamment dans le cadre d'une plateforme informatique virtualisée dont les ressources sont détenues par une pluralité d'entités propriétaires, qui ne souhaitent pas partager entre elles les infrastructures internes de leurs machines virtuelles.

D'autres méthodes alternatives comportent l'agrégation des attestations individuelles générées par les cibles de sorte à obtenir une attestation agrégée. Cette attestation agrégée est vérifiée par le vérificateur au sommet du graphe. Cependant, le temps de vérification de telles méthodes est particulièrement long, ce dernier étant linéaire au nombre d'attestations, et donc de cibles, contenues dans l'attestation agrégée. Même si des procédés d'optimisation existent et permettent de réduire dans certains cas ces temps de vérification, ces améliorations offrent malheureusement des gains en temps limités.

De façon générale, il est avantageux de pouvoir vérifier une signature agrégée en une position particulière, autrement dit de pouvoir vérifier l'attestation d'une cible en particulier. On parle alors de « vérification locale », par opposition à une « vérification globale » visant à vérifier si l'attestation agrégée est valide dans son ensemble. Les méthodes les moins couteuses reposent sur la génération d'attestations dont les messages ont été signés avec une unique clé. D'autres méthodes, exploitant l'algorithme ZK-SNARK (« Zero-Knowledge Succinct Non-interactive ARgument of Knowledge ») permettent la vérification locale d'attestations agrégées formées à partir de messages signés par une pluralité de clés, cependant ces méthodes sont extrêmement couteuses.

Par ailleurs, comme soulevé précédemment, il existe un besoin pour assurer la confidentialité des configurations des cibles tout en leur permettant d'attester qu'elles sont dans une configuration valide auprès du vérificateur. Des méthodes classiques, telles que le chiffrement, peuvent être exploitées afin de protéger les informations échangées. Cependant, cela sous-entend que la cible peut faire confiance au vérificateur. Des approches plus récentes, telles que l'algorithme ZK-SNARK, permettent la génération des preuves dites à divulgation nulle de connaissance. L'idée de ces méthodes est que la cible n'envoie pas sa configuration exacte comme preuve mais envoie une preuve qu'elle est dans une configuration valide parmi un ensemble de configurations valides possibles sans révéler la configuration dans laquelle elle est.

Il existe donc un réel besoin pour fournir des attestations qui soit dépourvues, au moins en partie, des inconvénients inhérents aux méthodes connues précitées. En particulier, il existe un besoin pour des attestations permettant de vérifier rapidement l'état de validité d'une pluralité de cibles dans une plateforme informatique virtualisée, dans leur globalité et individuellement. Il existe également un besoin pour améliorer la confidentialité dans les échanges d'attestations, notamment dans un contexte d'une plateforme informatique virtualisée dont les ressources sont détenues par une pluralité d'entités propriétaires. De façon générale, il existe un besoin pour fournir des attestations sécurisées générées rapidement, et pouvant être vérifiées rapidement tout en limitant la bande passante nécessaire.

Jae Hyun et al. décrit en particulier dans l'article « *Synchronized Aggregate Signatures : New Definitions, Constructions and Applications »,* IACR, International Association For Cryptologic Research, un modèle de signatures agrégées synchronisées. Cependant, ce modèle de signature ne permet pas une vérification locale desdites signatures agrégées.

L'invention vise à répondre à tout ou partie de ces besoins.

Exposé de l'invention

L'invention vise un procédé de signature d'un message $m_i$, par un dispositif utilisateur, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le procédé comportant :

- une étape de génération d'une paire de clés privée et publique, la clé privée comportant un élément $\alpha i$ sélectionné dans l'anneau Z/pZ, la clé publique comportant un premier élément $g^{\alpha_i}$ et un deuxième élément $\pi_i$ étant une preuve de possession à divulgation nulle de connaissance générée à partir du protocole cryptographique,
- une étape de génération d'une signature $\sigma_i$ du message $m_i$ à partir de la clé privée et d'un aléa 6, la signature comportant

  - un premier élément $\sigma_{1i} = (vu^{H(mi)})^{\alpha i}.(r^{\|lg(w)\|}s^w t)^6$ , et
  - un deuxième élément $\sigma_{2i} = g^6$ .

Le dispositif utilisateur peut être avantageusement compris dans une plateforme informatique virtualisée, comportant notamment une racine de confiance (RoT, « Root of Trust » en anglais).

De manière conventionnelle, une racine de confiance est configurée pour exécuter une ou plusieurs fonctions spécifiques de sécurisation de la plateforme informatique virtualisée.

La plateforme informatique virtualisée peut être utilisée pour assurer les fonctionnalités d'un réseau mobile ou mettre en œuvre une plateforme d'architecture VNF-FG (en anglais « Virtual Network Functions-Forwarding Graph»).L'invention vise également un procédé de signature d'un ensemble de messages $m_0$, ..., $m_n$, mis en œuvre dans une plateforme informatique virtualisée comportant une pluralité de dispositifs utilisateurs, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le procédé comportant :

- pour chaque message $m_i$ de l'ensemble de messages, i appartenant à l'intervalle [0, n], avec n un entier naturel supérieur ou égal à 1, la signature du message $m_i$ par un dispositif utilisateur de la pluralité de dispositifs utilisateurs, au moyen d'un procédé de génération d'une signature tel que décrit précédemment de sorte à générer une signature pour ledit message $m_i$, dite signature individuelle ;
- une étape d'agrégation de tout ou partie des signatures individuelles préalablement générées au cours de ladite période de temps courante w de sorte à générer une signature agrégée comportant un premier élément et un deuxième élément.

L'étape d'agrégation peut comporter l'agrégation de signatures individuelles entre elles et/ou de signatures agrégées préalablement générées.

L'étape d'agrégation peut comporter une interpolation des premiers éléments des signatures à agréger, et une interpolation des deuxièmes éléments des signatures à agréger.

L'étape d'agrégation peut être mise en œuvre en calculant le premier élément $\Theta_1$ et le deuxième élément $\Theta_2$ au moyen des formules suivantes :

$$[\text{Math. 1}] \quad \theta_1 = \prod_{i=0}^{n} \sigma_{1i} \; ; \; \theta_2 = \prod_{i=0}^{n} \sigma_{2i}$$

Corrélativement, l'invention concerne un dispositif utilisateur apte à signer un message $m_i$ à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le dispositif utilisateur comportant :

- un module de génération configuré pour générer une paire de clés privée et publique, la clé privée comportant un élément $\alpha i$ sélectionné dans l'anneau Z/pZ, la clé publique comportant un premier élément $g^{\alpha}_i$ et un deuxième élément $\pi_i$ étant une preuve de possession à divulgation nulle de connaissance générée à partir du protocole cryptographique,

- un module de génération apte à générer une signature $\sigma_i$ du message $m_i$ à partir de la clé privée et d'un aléa $\mathfrak{G}$, ladite signature comportant un premier élément $\sigma_{1i} = (vu^{H(mi)})^{\alpha i}.(r^{\lg(w)}|s^w t)^{\mathfrak{G}}$, et un deuxième élément $\sigma_{2i} = g^{\mathfrak{G}}$.

L'invention concerne également un groupe de dispositifs utilisateurs tels que décrits précédemment, dont tout ou partie des dispositifs utilisateurs comportent en outre :

- un module d'agrégation apte à agréger tout ou partie des signatures générées par lesdits dispositifs utilisateurs au cours de la période de temps courante w de sorte à générer une signature agrégée comportant un premier élément et un deuxième élément.

Par « signature agrégée », on entend une signature comportant plusieurs signatures individuelles de différents messages provenant de différents dispositifs utilisateurs agrégées ensemble de telle sorte que la signature résultante a une taille constante, qui est de préférence la même taille qu'une signature individuelle, et peut être vérifiée à partir de la connaissance des différents messages et des clés publiques associées.

La signature agrégée obtenue au moyen de l'invention permet en outre la génération de signatures agrégées dites synchronisées. Par « signature agrégée synchronisée » on entend une signature agrégée composée de signatures individuelles générées pour une même période de temps courante. Cela permet avantageusement d'éviter les attaques dites de relecture, ou « *replay attacks* » en anglais.

Ainsi, et d'une façon générale, l'invention propose un procédé de génération de signatures pouvant être générées à partir de paires de clés publique-privée différentes permettant non seulement de préserver la sécurité des échanges au sein d'un groupe de dispositifs utilisateurs mais également de réaliser une vérification locale d'une signature dans la signature agrégée.

En outre, le schéma de signature permet une agrégation dite « multi-hop » permettant d'agréger les signatures individuelles au fur et à mesure et non nécessairement en une seule fois. Autrement dit, l'agrégation peut porter sur des signatures individuelles exclusivement, des signatures agrégées exclusivement ou à la fois des signatures individuelles et des signatures agrégées. Cela peut permettre avantageusement de réaliser l'étape d'agrégation au sein d'un graphe.

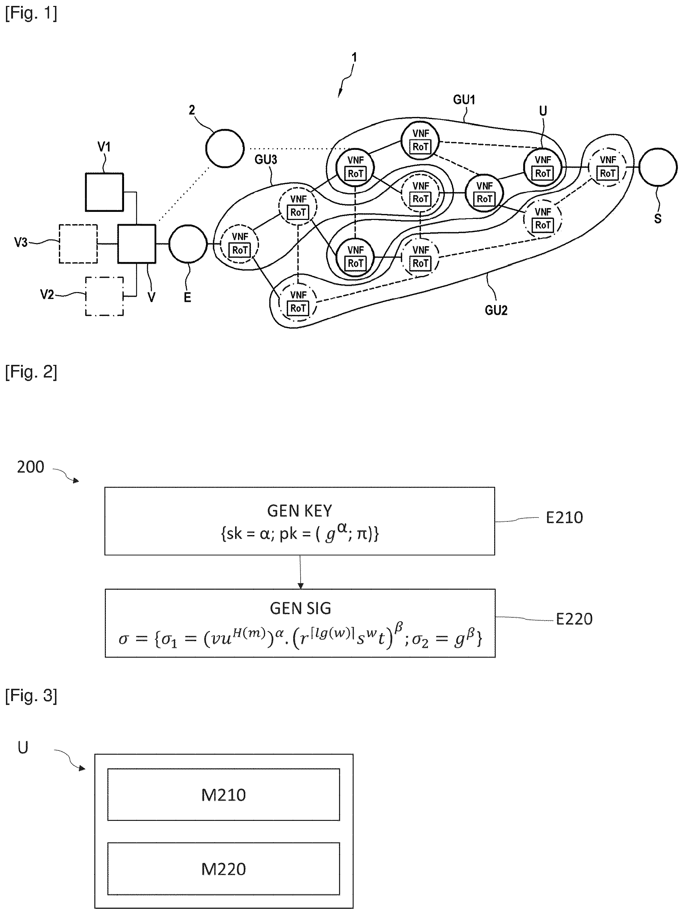

La plateforme informatique virtualisée peut avoir une architecture du type VNF-FG, acronyme pour l'expression anglaise « *Virtual Network Functions-Forwarding Graph »,* les dispositifs utilisateurs pouvant être des machines virtuelles, hébergeant chacune une fonction de réseau virtuelle (VNF pour l'expression anglais « Virtual Network Function »). Un tel graphe comporte un point d'entrée et un point de sortie. Une telle architecture est représentée en Fig. 1.

Le procédé peut comporter une étape de détermination d'un arbre, communément appelé « spanning tree » en anglais, sur ladite plateforme informatique virtualisée, reliant les dispositifs utilisateurs entre eux, par exemple par la mise en œuvre d'un algorithme « Spanning Tree Protocol ».

Le procédé peut en outre comporter une étape de réception, par le ou lesdits dispositifs utilisateurs, d'une requête d'attestation de la part d'un vérificateur, par exemple transmise via le point d'entrée. La signature d'un message par un dispositif utilisateur faisant suite à la réception de cette requête d'attestation par ledit dispositif utilisateur de sorte à fournir une preuve de configuration valide dudit dispositif utilisateur.

Après la génération de la signature à la suite de la réception d'une requête d'attestation, un dispositif utilisateur peut transmettre ladite signature à un autre dispositif utilisateur.

L'invention porte également sur un procédé de vérification, par un dispositif de vérification, d'une signature agrégée comportant un premier élément $\Theta_1$ et un deuxième élément $\Theta_2$ et générée pour un ensemble de messages $m_0$, ..., $m_n$ en utilisant un procédé de génération d'une signature selon l'invention, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le procédé comportant :

- une étape de vérification de l'égalité :

[Math. 2]

$$e(g, \Theta_1) = e(\prod_{i=0}^n g^{\alpha_i}, v). e\left(\prod_{i=0}^n g^{\alpha_i H(m_i)}, u\right). e\left(\Theta_2, r^{|lg(w)|}s^w t\right),$$

où e désigne un couplage bilinéaire défini sur les groupes $G_1$ et $G_2$ et à valeurs dans un groupe cyclique $G_T$,
- Si ladite égalité est vérifiée une étape de validation de ladite signature agrégée.

De préférence, le procédé de vérification selon l'invention comporte une étape préalable de génération d'un agrégat clés-messages à partir des messages $m_0$, ..., $m_n$, des clés publiques $g^\alpha{}_0$, ..., $g^\alpha{}_n$ issues des paires de clés générées pour la signature desdits messages, et de la fonction de hachage H.
L'étape préalable de génération de l'agrégat clés-messages peut avantageusement être effectuée en amont et une seule fois, permettant d'accélérer, par contraste, l'étape de vérification.
L'agrégat clés-messages peut comporter un premier élément apkm1 et un deuxième élément apkm2. Le premier élément peut être égal au produit des premiers éléments des clés publiques $g^\alpha{}_0$, ..., $g^\alpha{}_n$. Le deuxième élément peut être égal au produit des $g^{\alpha_i H(m_i)})$ pour i allant de 0 à n.
L'étape de vérification de l'égalité peut consister en la vérification de l'égalité :

[Math. 3]

$$e(g, \Theta_1) = e(apkm1, v). e(apkm2, u). e\left(\Theta_2, r^{|lg(w)|}s^w t\right)$$

Une telle étape peut permettre une vérification par lot à temps constant. Cela est notamment rendu possible du fait de l'absence d'utilisation de nonce dans la génération des signatures individuelles, sans pour autant que cette absence affecte la sécurité des échanges. En effet, l'utilisation d'une période de temps courante pour l'agrégation permet d'assurer une fraîcheur des signatures.
La vérification par lot à temps constant permet un contrôle de la durée de vérification, indépendamment du nombre de signatures individuelles formant ladite signature agrégée. Une telle vérification suppose la connaissance préalable, par le dispositif de vérification, des messages attendus du lot ainsi que des clés publiques associées auxdits messages.
L'invention porte également sur un procédé de vérification d'une signature individuelle d'un message $m_i$ comprise dans une signature agrégée comportant un premier élément $\Theta_1$ et un deuxième élément $\Theta_2$ et générée pour un ensemble de messages $m_0$, ..., $m_n$, i appartenant à l'intervalle [0,n] en utilisant un procédé de génération d'une signature selon l'invention, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le procédé comportant :

- une étape de vérification de l'égalité :

[Math. 4]

$$e(g, \Theta_1) =$$
$$e\left(g^{\alpha_i}. \prod_{k \in [0,n]\setminus\{i\}} g^{\alpha_k}, v\right). e\left(g^{\alpha_i H(m_i)}. \prod_{k \in [0,n]\setminus\{i\}} g^{\alpha_k H(m_k)}, u\right). e\left(\Theta_2, r^{|lg(w)|}s^w t\right),$$

où e désigne un couplage bilinéaire défini sur les groupes $G_1$ et $G_2$ et à valeurs dans un groupe cyclique $G_T$,
- Si ladite égalité est vérifiée une étape de validation de ladite signature individuelle.

De préférence, ledit procédé de vérification d'une signature individuelle comporte une étape de pré-traitement au cours de laquelle au moins une première information auxiliaire aux1, par exemple aux1= $\prod_{k \in [0,n]\setminus\{i\}} g^{\alpha_k}$, une deuxième information auxiliaire aux2, par exemple aux2= $\prod_{k \in [0,n]\setminus\{i\}} g^{\alpha_k H(m_k)}$ et une troisième information auxiliaire aux3, par exemple aux3 = (i, $\pi_{ZK}$), avec $\pi_{ZK}$ une preuve que les preuves de possessions des clés publiques sont valides, sont déterminées à partir des clés publiques $g^\alpha{}_0$, ..., $g^\alpha{}_n$ issues des paires de clés générées pour la signature desdits messages $m_0$, ..., $m_n$ et

desdits messages de sorte à précalculer des termes de l'égalité de l'étape de vérification.

Cette étape de pré-traitement peut avantageusement être effectuée en amont et une seule fois, permettant d'accélérer, par contraste, l'étape de vérification de l'égalité.

Corrélativement, l'invention concerne un dispositif de vérification, d'une signature agrégée comportant un premier élément $\Theta_1$ et un deuxième élément $\Theta_2$ et générée pour un ensemble de messages $m_0$, ..., $m_n$ en utilisant un procédé de génération d'une signature selon l'invention, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le dispositif de vérification comportant :

- un module de vérification apte à vérifier l'égalité :

[Math. 5]

$$e(g, \Theta_1) = e\left(\prod_{i=0}^{n} g^{\alpha_i}, v\right). e\left(\prod_{i=0}^{n} g^{\alpha_i H(m_i)}, u\right). e\left(\Theta_2, r^{|lg(w)|} s^w t\right),$$

où e désigne un couplage bilinéaire défini sur les groupes $G_1$ et $G_2$ et à valeurs dans un groupe cyclique $G_T$, et
- un module de validation de la signature agrégée activé si ladite égalité est vérifiée.

L'invention porte également sur un dispositif d'ouverture comportant un module de génération apte à générer, à partir des messages $m_0$, ..., $m_n$, des clés publiques $g^{\alpha}{}_0$, ..., $g^{\alpha}{}_n$ issues des paires de clés générées pour la signature desdits messages, et de la fonction de hachage H, un agrégat clés-messages, de sorte à permettre au module de vérification d'effectuer une vérification par lot.

Dans des modes de réalisation particuliers de l'invention, le dispositif d'ouverture est inclus dans le dispositif de vérification.

L'invention porte également sur dispositif de vérification apte à vérifier une signature individuelle d'un message $m_i$ comprise dans une signature agrégée comportant un premier élément $\Theta_1$ et un deuxième élément $\Theta_2$ et générée pour un ensemble de messages $m_0$, ..., $m_n$, i appartenant à l'intervalle [0,n] en utilisant un procédé de génération d'une signature selon l'invention, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le procédé comportant :

- un module de vérification de l'égalité :

[Math. 6]

$$e(g, \Theta_1) =$$

$$e\left(g^{\alpha_i} . \prod_{k \in [0,n] \setminus \{i\}} g^{\alpha_k}, v\right). e\left(g^{\alpha_i H(m_i)} . \prod_{k \in [0,n] \setminus \{i\}} g^{\alpha_k H(m_k)}, u\right). e\left(\Theta_2, r^{|lg(w)|} s^w t\right),$$

où e désigne un couplage bilinéaire défini sur les groupes $G_1$ et $G_2$ et à valeurs dans un groupe cyclique $G_T$, et
- un module de validation de la signature individuelle activé si ladite égalité est vérifiée.

De préférence, ledit dispositif de vérification d'une signature individuelle peut comporter un module de pré-traitement apte à déterminer au moins une première information auxiliaire aux1, une deuxième information auxiliaire aux2 et une troisième information auxiliaire aux3 sont déterminées à partir des clés publiques $g^{\alpha}{}_0$, ..., $g^{\alpha}{}_n$ issues des paires de clés générées pour la signature desdits messages $m_0$, ..., $m_n$ et desdits messages.

Dans des modes de réalisation particuliers de l'invention, le module de pré-traitement est intégré dans un dispositif d'ouverture selon l'invention, distinct du dispositif de vérification.

Les informations auxiliaires peuvent avantageusement permettre de calculer plus rapidement l'égalité. Par ailleurs, elles peuvent être calculées en amont, le dispositif de vérification connaissant les messages attendus et les clés publiques des dispositifs utilisateurs dont il veut vérifier la signature.

Enfin, l'invention concerne un système de communication comportant :

- un groupe de dispositifs utilisateurs selon l'invention, et
- un ou plusieurs dispositifs de vérification selon l'invention.

En particulier, le système de communication comporte des dispositifs utilisateurs détenus par une pluralité d'entités propriétaires. De préférence, le système de communication comporte alors un dispositif de vérification pour chaque entité propriétaire apte à vérifier des signatures individuelles et/ou agrégées relatives exclusivement aux dispositifs utilisateurs détenus par ladite entité propriétaire, et un dispositif de vérification apte à vérifier des signatures générées par l'intégralité des dispositifs utilisateurs.

Dans certains modes de réalisation, le protocole cryptographique est fondé sur l'algorithme ZK-SNARK.

Bien que le calcul de la preuve de possession ZK-SNARK puisse être très coûteux, l'étape de pré-traitement déterminant des informations auxiliaires à partir de données publiques combinée au fait que le dispositif de vérification connaît les messages signés attendus permet de calculer à l'avance les informations auxiliaires une seule fois et de les réutiliser à chaque fois. Ainsi, quand bien même l'algorithme ZK-SNARK est exploité, la mise en œuvre du procédé de vérification d'une signature individuelle est efficace et pratique.

De façon générale, l'invention permet ainsi la génération d'un schéma de signature agrégée synchronisée multi-signataires vérifiable par lot à temps constant pouvant être vérifiée localement et globalement.

En outre, l'étape de génération préalable des agrégats clés-messages permet en particulier la mise en œuvre d'une vérification par lot à temps constant, « constant time batch verification » en anglais, par un vérificateur global.

L'invention permet ainsi de contrôler des attestations, notamment dans une plateforme informatique virtualisée de type VNF-FG, qui sont générées et vérifiées, à la fois localement et globalement, efficacement tout en utilisant une bande passante plus faible que les méthodes connues.

Dans des modes de réalisations particuliers, tout ou partie des étapes d'un procédé selon l'invention, de préférence toutes les étapes, sont mises en œuvre par des instructions de programme d'ordinateur.

Ainsi, l'invention vise aussi un programme d'ordinateur comportant des instructions de code, qui lorsqu'elles sont exécutées au moyen d'un ordinateur permettent la mise en œuvre d'un procédé selon l'invention ainsi qu'un support d'enregistrement lisible par un ordinateur sur lequel est enregistré un programme d'ordinateur comprenant des instructions pour l'exécution des étapes d'un procédé selon l'invention.

Les caractéristiques et avantages précités, ainsi que d'autres, apparaîtront à la lecture de la description détaillée qui suit. Cette description détaillée fait référence aux dessins annexés.

Brève description des dessins

Les dessins annexés sont schématiques et visent avant tout à illustrer les principes de l'exposé.

Sur ces dessins, d'une figure à l'autre, des éléments (ou parties d'élément) identiques sont repérés par les mêmes signes de référence.

[Fig. 1] La figure 1 est une plateforme informatique virtualisée selon l'invention.

[Fig. 2] La figure 2 illustre les étapes d'un exemple de mise en œuvre d'un procédé de signature individuelle par un dispositif utilisateur selon l'invention,

[Fig. 3] La figure 3 représente un exemple d'architecture fonctionnelle d'un dispositif utilisateur selon l'invention,

[Fig. 4] La figure 4 illustre les étapes d'un exemple de mise en œuvre d'un procédé de signature agrégée mise en œuvre par un groupe de dispositifs utilisateur selon l'invention,

[Fig. 5] La figure 5 représente un exemple d'architecture fonctionnelle d'un dispositif utilisateur selon l'invention,

[Fig. 6] La figure 6 illustre les étapes d'un exemple de mise en œuvre d'un procédé de vérification d'une signature par un dispositif de vérification selon l'invention,

[Fig. 7] La figure 7 représente un exemple d'architecture fonctionnelle d'un dispositif de vérification selon l'invention,

[Fig. 8] La figure 8 illustre les étapes d'un exemple de mise en œuvre d'un autre procédé de vérification d'une signature par un dispositif de vérification selon l'invention,

[Fig. 9] La figure 9 représente un exemple d'architecture fonctionnelle d'un dispositif de vérification selon l'invention,

[Fig. 10] La figure 10 illustre un exemple d'architecture matérielle d'un dispositif utilisateur et/ou d'un dispositif de vérification et/ou d'une plateforme informatique virtualisée selon l'invention.

Description des modes de réalisation

Afin de rendre plus concret l'exposé, un exemple de plateforme informatique virtualisée 1 comportant une pluralité de dispositifs utilisateurs U et une pluralité de dispositifs de vérification V, V1, V2, V3 est représentée à la Figure 1 et est décrite en détail ci-après, en référence aux dessins annexés. Il est rappelé que l'invention ne se limite pas à cet exemple.

Dans l'exemple illustré, la plateforme informatique virtualisée 1 a une architecture du type VNF-FG, comportant entre autres un point d'entrée E, un point de sortie S et un dispositif gestionnaire 2.

Les dispositifs utilisateurs U peuvent être des fonctions de réseau virtuelles, par exemple hébergées dans des machines virtuelles. Cet exemple, bien que préféré, n'est pas limitatif.

Les dispositifs utilisateurs peuvent être détenus par des entités propriétaires différentes. Par exemple les dispositifs utilisateurs du groupe GU1 de dispositifs utilisateurs peuvent être détenus par une première entité propriétaire, les dispositifs utilisateurs du groupe GU2 de dispositifs utilisateurs peuvent être détenus par une deuxième entité propriétaire, et les dispositifs utilisateurs du groupe GU3 de dispositifs utilisateurs peuvent être détenus par une troisième entité propriétaire.

Pour chaque entité propriétaire, la plateforme informatique virtualisée peut comporter un dispositif de vérification V1, V2, V3, dit local, apte à vérifier une signature agrégée ou individuelle d'un ou des dispositifs utilisateurs détenus par ladite entité propriétaire.

La plateforme informatique virtualisée 1 comporte de préférence au moins un dispositif de vérification V, dit global, apte à vérifier une signature agrégée de l'ensemble des dispositifs utilisateurs de la plateforme informatique virtualisée.

Chaque dispositif utilisateur U est en mesure de signer un message m grâce à l'invention.

De façon générale, l'invention permet de fournir des attestations destinées à prouver que les dispositifs utilisateurs sont dans une configuration correspondant à un état valide auprès d'un dispositif de vérification.

Pour cela, une requête d'attestation est envoyée, par un dispositif de vérification, auprès des dispositifs utilisateurs de la plateforme informatique virtualisée. La requête peut être transmise aux dispositifs utilisateurs via le point d'entrée E puis est propagée jusqu'au point de sortie S, via des connexions reliant les dispositifs utilisateurs U entre eux. Notamment, la requête est propagée le long d'un arbre, communément appelé « spanning tree » en anglais. Le procédé peut comporter une étape de détermination d'un tel arbre sur ladite plateforme informatique virtualisée, par exemple par la mise en œuvre d'un algorithme « Spanning Tree Protocol ».

La figure 1 représente plateforme informatique virtualisée d'architecture du type VNF-FG sur laquelle un exemple de mise en œuvre de « spanning tree » a été calculé. Les liaisons en trait plein et en pointillé représentent des connexions entre les éléments de la plateforme informatique virtualisée. Les liaisons en pointillé ne sont cependant pas utilisées par l'arbre calculé par le « spanning tree » contrairement aux liaisons en trait plein. Ainsi, dans l'exemple de la figure 1, la requête est propagée le long des liaisons en trait plein. De même, les messages signés par les dispositifs utilisateurs sont avantageusement remontés et progressivement agrégés jusqu'au point d'entrée E le long des liaisons en trait plein.

Dès réception de la requête par un dispositif utilisateur U, ce dernier génère une attestation en réponse à cette requête destinée à prouver qu'il est dans une configuration correspondant à un état valide.

La génération de l'attestation consiste en la signature d'un message m. Le message m étant porteur d'une preuve que ledit dispositif utilisateur est dans une des configurations parmi un ensemble de configurations valides indiquées dans ledit message m.

Pour permettre une telle signature, un protocole cryptographique est défini.

Le protocole cryptographique peut être déterminé par le dispositif gestionnaire 2. De préférence, le dispositif gestionnaire contrôle l'infrastructure de la plateforme informatique virtualisée.

Le protocole cryptographique est un protocole de preuve à divulgation nulle de connaissance. Notamment le protocole cryptographique est un algorithme du type ZK-SNARK.

Le protocole cryptographique est entre autres défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w.

De préférence, une horloge commune est partagée par les dispositifs utilisateurs et le ou les dispositifs de vérification de sorte que la période de temps courante est commune.

En particulier, l'horloge peut être positionnée dans la racine de confiance (Root of Trust, RoT) de chacun des dispositifs utilisateurs. Alternativement, l'horloge peut être contenue dans le dispositif gestionnaire 2.

Afin de fournir l'attestation en réponse à ladite requête, chaque dispositif utilisateur U met en œuvre un procédé 200 de signature d'un message m selon l'invention, tel qu'illustré à la figure 2.

Le procédé 200 de signature d'un message m est effectué à partir du protocole cryptographique de preuve à divulgation nulle de connaissance défini précédemment.

Ledit procédé 200 comporte une étape E210 de génération d'une paire de clés privée et publique, la clé privée comportant un élément $\alpha$ sélectionné dans l'anneau Z/pZ, la clé publique comportant un premier élément $g^\alpha$ et un deuxième élément $\pi$ étant une preuve de possession à divulgation nulle de connaissance générée à partir du protocole cryptographique, et une étape E220 de génération d'une signature $\sigma$ du message m à partir de la clé privée et d'un aléa ϐ, la signature comportant un premier élément $\sigma_1 = (vu^{H(m)})^\alpha .(r^{|lg(w)|} s^w t)^ϐ$ , et un deuxième élément $\sigma_2 = g^ϐ$ .

La preuve de possession est une preuve que le dispositif utilisateur est en possession de la clé privée $\alpha$ associée à la clé publique $(g^\alpha, \pi)$. Une telle preuve de possession peut notamment permettre d'éviter les attaques de type « *rogue key attack* » lors d'une étape d'ouverture et/ou de vérification locale.

Chaque dispositif utilisateur U comporte des modules configurés pour mettre en œuvre un procédé 200 de génération d'une signature comportant au moins un module M210 de génération configuré pour mettre en œuvre une étape E210 de génération d'une paire de clés privée et publique, un module M220 de génération configuré pour mettre en œuvre une étape E220 de génération d'une signature $\sigma$ du message m.

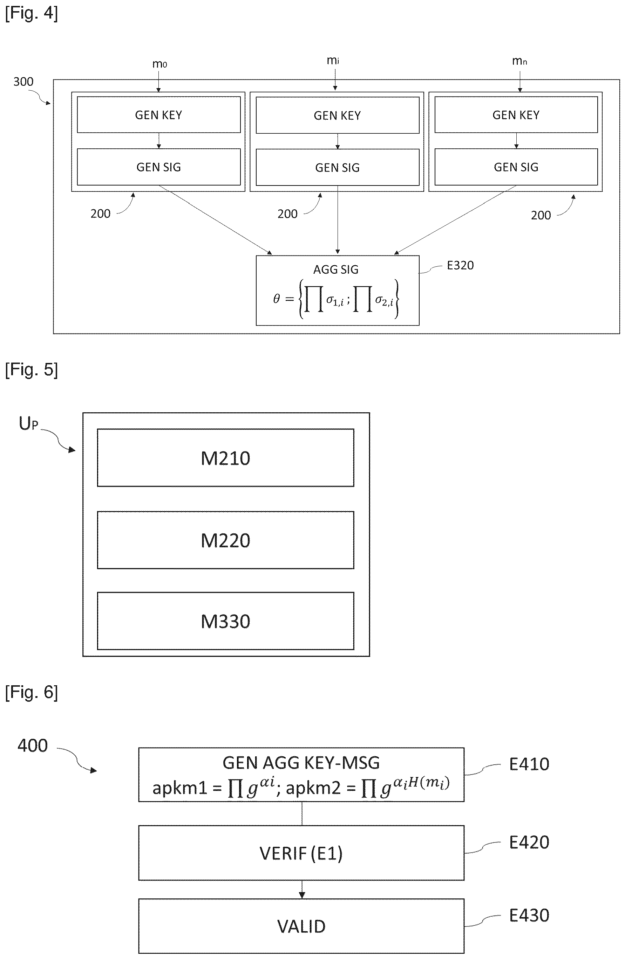

A la figure 4 est représenté un procédé 300 de signature d'un ensemble de messages $m_0, ..., m_n$, mis en œuvre dans une plateforme informatique virtualisée comportant une pluralité de dispositifs utilisateurs $U_0, ..., U_n$, à partir du protocole cryptographique de preuve à divulgation nulle de connaissance.

Le procédé 300 comporte : pour chaque message $m_i$ de l'ensemble de messages, i appartenant à l'intervalle [0, n], la signature du message $m_i$ par le dispositif utilisateur correspondant $U_i$ de la pluralité de dispositifs utilisateurs, au moyen de la mise en œuvre du procédé de génération 200 d'une signature tel que décrit précédemment de sorte à générer une signature $\sigma_i$ pour ledit message $m_i$, dite signature individuelle ; puis une étape d'agrégation E320 de tout ou partie des signatures individuelles préalablement générées au cours de ladite période de temps courante w de sorte à générer une signature agrégée comportant un premier élément et un deuxième élément.

De préférence, les dispositifs utilisateurs dits parents $U_P$, comportent en outre un module M330 d'agrégation de signatures générées au moyen d'un procédé 200 de génération d'une signature selon l'invention, tel qu'illustré à la figure 5.

Les dispositifs utilisateurs parents sont des dispositifs utilisateurs non directement relié au point de sortie S.

L'agrégation peut être effectuée à partir de signatures individuelles générées par la mise en œuvre d'un procédé 200 et/ou à partir de signatures agrégées générées par la mise en œuvre d'un procédé 300.

Les signatures individuelles sont progressivement propagées des dispositifs utilisateurs jusqu'au point d'entrée E.

Cette signature agrégée formées de signatures individuelles générée au moyen d'un procédé 300 selon l'invention est destinée à être vérifiée par un dispositif de vérification V.

Nous allons maintenant décrire en référence à la figure 6 un procédé 400 de vérification, d'une signature agrégée comportant un premier élément $\Theta_1$ et un deuxième élément $\Theta_2$ et générée pour un ensemble de messages $m_0, ..., m_n$ en utilisant un procédé de génération d'une signature selon l'invention, à partir d'un protocole cryptographique de preuve à divulgation nulle de connaissance le procédé comportant une étape E420 de vérification de l'égalité :

[Math. 7]

$$(E1): e(g, \Theta_1) = e\left(\prod_{i=0}^n g^{\alpha_i}, v\right) . e\left(\prod_{i=0}^n g^{\alpha_i H(m_i)}, u\right) . e\left(\Theta_2, r^{|lg(w)|} s^w t\right),$$

où e désigne un couplage bilinéaire défini sur les groupes $G_1$ et $G_2$ et à valeurs dans un groupe cyclique $G_T$, et

- si ladite égalité est vérifiée une étape E430 de validation de ladite signature agrégée.

Le procédé 400 peut en outre comporter une étape préalable E410 de génération d'un agrégat clés-messages à partir des messages $m_0, ..., m_n$, des clés publiques $g^{\alpha_0}, ..., g^{\alpha_n}$ issues des paires de clés générées pour la signature individuelles desdits messages, et de la fonction de hachage H.

L'agrégat clés-messages peut comporter un premier élément apkm1 égal au produit des premiers éléments des clés publiques $g^{\alpha_0}, ..., g^{\alpha_n}$, et un deuxième élément apkm2 égal au produit des $g^{\alpha_i H(m_i)}$ pour i allant de 0 à n. Une telle étape E410 permet une vérification par lot à temps constant.

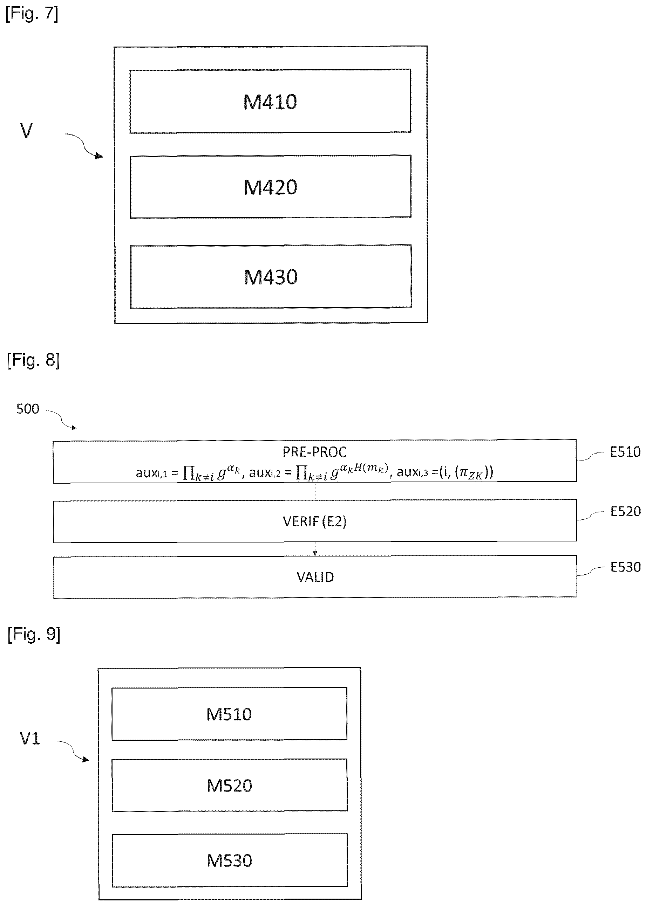

Le dispositif de vérification V comporte des modules configurés pour mettre en œuvre un procédé 400 de vérification d'une signature agrégée comportant au moins un module M420 de vérification configuré pour mettre en œuvre une étape 420 de vérification de l'égalité ci-dessus, et un module M430 de validation configuré pour mettre en œuvre une étape E430 de validation d'une signature. Un tel dispositif est illustré à la figure 7.

De préférence, le dispositif de vérification V comporte en outre un module M410 de génération d'un agrégat clés-messages configuré pour mettre en œuvre une étape 410 de génération d'un agrégat clés-messages à partir des messages $m_0, ..., m_n$, des clés publiques $g^{\alpha_0}, ..., g^{\alpha_n}$ issues des paires de clés générées pour la signature desdits messages, et de la fonction de hachage H.

Alternativement, le module M410 de génération d'un agrégat clés-messages peut être compris dans un dispositif d'ouverture (non représenté), distinct du dispositif de vérification V.

Outre la vérification globale décrite ci-dessus, l'invention porte également sur une vérification locale. Autrement dit, l'invention permet la vérification des signatures individuelles d'un sous-groupe des dispositifs de la plateforme informatique virtualisée.

En particulier, l'invention rend possible la vérification des signatures individuelles signées par des dispositifs utilisateurs d'un groupe de dispositifs utilisateurs détenus par une entité propriétaire particulière. Par exemple, le dispositif de vérification V1 peut être configuré pour mettre en œuvre un procédé de vérification d'une signature individuelle générée par l'un des dispositifs du sous-groupe de dispositifs GU1.

En référence à la figure 8, un procédé de vérification 500 d'une signature individuelle d'un message $m_i$ comprise dans une signature agrégée comportant un premier élément $\Theta_1$ et un deuxième élément $\Theta_2$ et générée pour un ensemble de messages $m_0$, ..., $m_n$, i appartenant à l'intervalle [0,n] en utilisant un procédé de génération d'une signature selon l'invention, à partir du protocole cryptographique de preuve à divulgation nulle de connaissance. Le procédé 500 comporte une étape E520 de vérification de l'égalité :

$$[\text{Math. 8}]$$

$$(E2)\colon e(g,\theta_1) =$$

$$e\big(g^{\alpha_i}.\textstyle\prod_{k\in[0,n]\setminus\{i\}} g^{\alpha_k}, v\big).e\big(g^{\alpha_i H(m_i)}.\textstyle\prod_{k\in[0,n]\setminus\{i\}} g^{\alpha_k H(m_k)}, u\big).e\big(\Theta_2, r^{|lg(w)|}s^w t\big),$$

où e désigne un couplage bilinéaire défini sur les groupes $G_1$ et $G_2$ et à valeurs dans un groupe cyclique $G_T$, et

- si ladite égalité est vérifiée une étape E530 de validation de ladite signature individuelle $\sigma_i$.

Ledit procédé 500 de vérification d'une signature individuelle $\sigma_i$ comporte de préférence une étape E510 de pré-traitement au cours de laquelle au moins une première information auxiliaire $aux_{i1}$, une deuxième information auxiliaire $aux_{i2}$ et une troisième information auxiliaire $aux_{i3}$ sont déterminées à partir des clés

publiques $g^{\alpha}_0$, ..., $g^{\alpha}_n$ issues des paires de clés générées pour la signature desdits messages $m_0$, ..., $m_n$ et desdits messages.

La première information auxiliaire peut être égale à

$$[\text{Math. 9}]$$

$$aux_{i1} = \textstyle\prod_{k\in[0,n]\setminus\{i\}} g^{\alpha_k},$$

avec i l'indice du message à vérifier localement.

La deuxième information auxiliaire peut être égale à

$$[\text{Math. 10}]\ aux_{i2} \ \textstyle\prod_{k\in[0,n]\setminus\{i\}} g^{\alpha_k H(m_k)},$$

avec i l'indice du message à vérifier localement.

La troisième information peut être égale à

$$[\text{Math. 11}]\ aux_{i3} = (i, \pi_{ZK}),$$

avec i l'indice du message à vérifier localement et $\pi_{ZK}$ une preuve que les preuves de possessions des clés publiques sont valides.

Le dispositif de vérification V1, V2, V3 comporte des modules configurés pour mettre en œuvre un procédé 500 de vérification d'une signature individuelle comportant au moins un module M520 de vérification configuré pour mettre en œuvre une étape 520 de vérification de l'égalité ci-dessus, et un module M530 de validation configuré pour mettre en œuvre une étape E530 de validation d'une signature individuelle.

De préférence, le dispositif de vérification V1, V2, V3 comporte en outre un module M510 de pré-traitement pour mettre en œuvre une étape 510 de détermination d'informations auxiliaires au cours de laquelle au moins une première information auxiliaire $aux_{i1}$, une deuxième information auxiliaire $aux_{i2}$ et une troisième information auxiliaire $aux_{i3}$ sont déterminées à partir des clés publiques $g^{\alpha}_0, ..., g^{\alpha}_n$ issues des paires de clés générées pour la signature desdits messages $m_0, ..., m_n$ et desdits messages.

Alternativement, le module M510 de pré-traitement peut être compris dans un dispositif d'ouverture (non représenté), distinct du dispositif de vérification V1, V2, V3.

Dans un mode particulier de réalisation, les différentes étapes des procédés selon l'invention sont déterminées par des instructions de programmes d'ordinateurs.

En conséquence, l'invention vise aussi un programme d'ordinateur sur un support d'informations, ce programme étant susceptible d'être mis en œuvre dans un dispositif utilisateur, et/ou un dispositif de vérification selon l'invention ou plus généralement dans un ordinateur, ce programme comportant des instructions adaptées à la mise en œuvre des étapes d'un procédé selon l'invention tel que décrit ci-dessus.

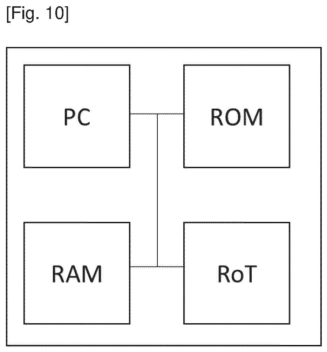

Ainsi, dans des modes de réalisation particuliers, la plateforme informatique virtualisée 1 a l'architecture matérielle d'un ordinateur, telle que représentée à la figure 10. Il convient de noter que certains éléments de cette architecture peuvent être confondus avec des dispositifs existants.

Plus précisément, la plateforme informatique virtualisée de signature 1 peut comporter un processeur PC, une mémoire morte ROM, une mémoire vive RAM, une racine de confiance RoT et des moyens de communication.

Il convient de noter que la racine de confiance peut être constituée d'éléments logiciels mais elle est préférentiellement implémentée sous la forme d'un module matériel.

La racine de confiance fournit les services de sécurisation de la plateforme. En particulier, elle est utilisée pour stocker et protéger les clés de la plateforme, ces clés ne pouvant être utilisées par les autres ressources sans cette racine de confiance.

Cette racine de confiance est par exemple constituée par un module de confiance conforme aux normes standard ISO/IEC.

La mémoire morte de la plateforme informatique virtualisée 1 constitue un support d'enregistrement lisible par le processeur et sur lequel est enregistré un programme d'ordinateur conforme à l'invention, comportant des instructions pour l'exécution des étapes d'un procédé selon l'invention détaillé plus haut.

Ce programme d'ordinateur définit de façon équivalente des modules fonctionnels (logiciels) de la plateforme informatique virtualisée 1.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De façon équivalente, dans des modes de réalisation particuliers, les dispositifs utilisateurs U et/ou les dispositifs de vérification ont l'architecture matérielle d'un ordinateur, telle que représentée à la figure 10. Il convient de noter que certains éléments de cette/ces architectures peuvent être confondus avec des dispositifs existants.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## EP 4 679 768 A1

**Revendications**

1. Procédé de signature d'un message $m_i$, par un dispositif utilisateur, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le procédé comportant :

   - une étape de génération d'une paire de clés privée et publique, la clé privée comportant un élément $\alpha i$ sélectionné dans l'anneau Z/pZ, la clé publique comportant un premier élément $g^{\alpha}_i$ et un deuxième élément $\pi_i$ étant une preuve de possession à divulgation nulle de connaissance générée à partir du protocole cryptographique,

   - une étape de génération d'une signature $\sigma_i$ du message $m_i$ à partir de la clé privée et d'un aléa $\mathfrak{b}$ , la signature comportant

      - un premier élément $\sigma_{1i} = (vu^{H(mi)})^{\alpha i}.(r^{|lg(w)|}s^w t)$, et

      - un deuxième élément $\sigma_{2i} = g^{\mathfrak{b}}$ .

2. Procédé de signature d'un ensemble de messages m0, ..., mn, mis en œuvre dans une plateforme informatique virtualisée comportant une pluralité de dispositifs utilisateurs, à partir d'un protocole cryptographique de preuve à divulgation nulle de connaissance défini par un élément g appartenant à un groupe G1 cyclique d'ordre p, avec p désignant un nombre entier premier, et des éléments u, v, r, s, t appartenant à un groupe G2 cyclique d'ordre p, une fonction de hachage H et une période de temps courante w, le procédé comportant :

   - pour chaque message mi de l'ensemble de messages, i appartenant à l'intervalle [0, n], la signature du message mi par un dispositif utilisateur de la pluralité de dispositifs utilisateurs, au moyen d'un procédé de génération d'une signature selon la revendication 1 de sorte à générer une signature pour ledit message mi, dite signature individuelle ;
   - une étape d'agrégation de tout ou partie des signatures individuelles préalablement générées au cours de ladite période de temps courante w de sorte à générer une signature agrégée comportant un premier élément et un deuxième élément.

3. Procédé de signature selon la revendication 2, dans lequel l'étape d'agrégation comporte l'agrégation de signatures individuelles entre elles et/ou de signatures agrégées préalablement générées.

4. Procédé de signature selon l'une quelconque des revendications 2 ou 3, dans lequel la plateforme informatique virtualisée a une architecture du type VNF-FG (Virtual Network Functions-Forwarding Graph).

5. Procédé de vérification, par un dispositif de vérification, d'une signature agrégée comportant un premier élément $\Theta_1$ et un deuxième élément $\Theta_2$ et générée pour un ensemble de messages $m_0$, ..., $m_n$ en utilisant un procédé de génération d'une signature selon l'une quelconque des revendications 2 à 4, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le procédé comportant :

   - une étape de vérification de l'égalité :

$$e(g, \Theta_1) = e\left(\prod_{i=0}^{n} g^{\alpha_i}, v\right).e\left(\prod_{i=0}^{n} g^{\alpha_i H(m_i)}, u\right).e\left(\Theta_2, r^{|lg(w)|}s^w t\right),$$

   où e désigne un couplage bilinéaire défini sur les groupes $G_1$ et $G_2$ et à valeurs dans un groupe cyclique $G_T$,
   - Si ladite égalité est vérifiée une étape de validation de ladite signature agrégée.

6. Procédé de vérification selon la revendication 5, comportant une étape préalable de génération d'un agrégat clés-messages à partir des messages $m_0$, ..., $m_n$, des clés publiques $g^{\alpha}_0$, ..., $g^{\alpha}_n$ issues des paires de clés générées pour la signature desdits messages, et de la fonction de hachage H.

12

7. Procédé de vérification d'une signature individuelle d'un message $m_i$ comprise dans une signature agrégée comportant un premier élément $\Theta_1$ et un deuxième élément $\Theta_2$ et générée pour un ensemble de messages $m_0$, ..., $m_n$ , i appartenant à l'intervalle [0,n] en utilisant un procédé de génération d'une signature selon l'une quelconque des revendications 2 à 4, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le procédé comportant :

- une étape de vérification de l'égalité : $e(g, \Theta_1) = e(g^{\alpha i}.\Pi_{k\in[0,n]\backslash\{i\}}g^{\alpha k}, v).e(g^{\alpha kH(m_k)}.\Pi_{k\in[0,n]\backslash\{i\}}g^{\alpha kH(m_k)}, u).e(\Theta_2, r^{|lg(w)|}s^w t)$, où e désigne un couplage bilinéaire défini sur les groupes $G_1$ et $G_2$ et à valeurs dans un groupe cyclique $G_T$,
- Si ladite égalité est vérifiée une étape de validation de ladite signature individuelle.

8. Procédé selon la revendication 7 comportant une étape de pré-traitement au cours de laquelle au moins une première information auxiliaire aux1, une deuxième information auxiliaire aux2 et une troisième information auxiliaire aux3 sont déterminées à partir des clés publiques $g^{\alpha}_0$, ..., $g^{\alpha}_n$ issues des paires de clés générées pour la signature desdits messages $m_0$, ..., $m_n$ et desdits messages de sorte à précalculer des termes de l'égalité de l'étape de vérification.

9. Dispositif utilisateur apte à signer un message $m_i$ à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le dispositif utilisateur comportant :

- un module de génération configuré pour générer une paire de clés privée et publique, la clé privée comportant un élément $\alpha i$ sélectionné dans l'anneau Z/pZ, la clé publique comportant un premier élément $g^{\alpha_i}$ et un deuxième élément $\pi_i$ étant une preuve de possession à divulgation nulle de connaissance générée à partir du protocole cryptographique,

- un module de génération apte à générer une signature $\sigma_i$ du message $m_i$ à partir de la clé privée et d'un aléa $\delta$ ,

ladite signature comportant un premier élément $\sigma_{1i} = (vu^{H(mi)})^{\alpha i}.(r^{|lg(w)|}s^w t)$, et un deuxième élément $\sigma_{2i} = g^{\delta}$ .

10. Dispositif de vérification, d'une signature agrégée comportant un premier élément $\Theta_1$ et un deuxième élément $\Theta_2$ et générée pour un ensemble de messages $m_0$, ..., $m_n$ en utilisant un procédé de génération d'une signature selon l'une des revendications 2 à 4, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le dispositif de vérification comportant :

- un module de vérification apte à vérifier l'égalité :

$$e(g,\Theta_1) = e\left(\prod_{i=0}^n g^{\alpha_i}, v\right).e\left(\prod_{i=0}^n g^{\alpha_i H(m_i)}, u\right).e\left(\Theta_2, r^{|lg(w)|}s^w t\right),$$

où e désigne un couplage bilinéaire défini sur les groupes $G_1$ et $G_2$ et à valeurs dans un groupe cyclique $G_T$, et
- un module de validation de la signature agrégée activé si ladite égalité est vérifiée.

11. Dispositif de vérification apte à vérifier une signature individuelle d'un message $m_i$ comprise dans une signature agrégée comportant un premier élément $\Theta_1$ et un deuxième élément $\Theta_2$ et générée pour un ensemble de messages $m_0$, ..., $m_n$ , i appartenant à l'intervalle [0,n] en utilisant un procédé de génération d'une signature selon l'une quelconque des revendications 2 à 4, à partir d'un protocole cryptographique de preuve à divulgation nulle de connaissance défini par un élément g appartenant à un groupe $G_1$ cyclique d'ordre p, avec p désignant un nombre entier premier, et des éléments u, v, r, s, t appartenant à un groupe $G_2$ cyclique d'ordre p, une fonction de hachage H et une période de temps courante w, le procédé comportant :

- un module de vérification de l'égalité : $e(g, \Theta_1) = e(g^{\alpha i}.\Pi_{k\in[0,n]\backslash\{k\}}g^{\alpha k}, v).e(g^{\alpha kH(m_k)}.\Pi_{k\in[0,n]\backslash\{k\}}g^{\alpha kH(m_k)}, u).e(\Theta_2, r^{|lg(w)|}s^w t)$, où e désigne un couplage bilinéaire défini sur les groupes $G_1$ et $G_2$ et à valeurs dans un groupe cyclique $G_T$, et
- un module de validation de la signature individuelle activé si ladite égalité est vérifiée.

**12.** Système de communication comportant :

- un groupe de dispositifs utilisateurs selon la revendication 9 dont tout ou partie des dispositifs utilisateurs comportent en outre un module d'agrégation apte à agréger tout ou partie des signatures générées par lesdits dispositifs utilisateurs au cours de la période de temps courante w de sorte à générer une signature agrégée comportant un premier élément et un deuxième élément, et
- un ou plusieurs dispositifs de vérification selon l'une quelconque des revendications 10 ou 11.

**13.** Programme d'ordinateur comportant des instructions de code, qui lorsqu'elles sont exécutées au moyen d'un ordinateur permettent la mise en œuvre d'un procédé selon l'une quelconque des revendication 1 à 8.

**14.** Support d'enregistrement lisible par un ordinateur sur lequel est enregistré un programme d'ordinateur comprenant des instructions pour l'exécution des étapes d'un procédé selon l'une quelconque des revendication 1 à 8.

[Fig. 1]

[Fig. 2]

GEN KEY
$\{sk = \alpha;\ pk = (\,g^{\alpha};\pi)\}$ — E210

GEN SIG
$\sigma = \{\sigma_1 = (vu^{H(m)})^{\alpha} \cdot \left(r^{\lceil lg(w)\rceil} s^{w} t\right)^{\beta};\sigma_2 = g^{\beta}\}$ — E220

200

[Fig. 3]

U

M210

M220

[Fig. 4]

[Fig. 5]

[Fig. 6]

[Fig. 7]

```
              ┌─────────────────────────┐
              │  ┌───────────────────┐   │
              │  │       M410        │   │
              │  └───────────────────┘   │
    V         │  ┌───────────────────┐   │
    ─────────▶│  │       M420        │   │
              │  └───────────────────┘   │
              │  ┌───────────────────┐   │
              │  │       M430        │   │
              │  └───────────────────┘   │
              └─────────────────────────┘
```

[Fig. 8]

500

| PRE-PROC $\mathrm{aux}_{i,1} = \prod_{k \neq i} g^{\alpha_k}$, $\mathrm{aux}_{i,2} = \prod_{k \neq i} g^{\alpha_k H(m_k)}$, $\mathrm{aux}_{i,3} = (i, (\pi_{ZK}))$ | E510 |
|---|---|
| VERIF (E2) | E520 |
| VALID | E530 |

[Fig. 9]

```
              ┌─────────────────────────┐
              │  ┌───────────────────┐   │
              │  │       M510        │   │
              │  └───────────────────┘   │
    V1        │  ┌───────────────────┐   │
    ─────────▶│  │       M520        │   │
              │  └───────────────────┘   │
              │  ┌───────────────────┐   │
              │  │       M530        │   │
              │  └───────────────────┘   │
              └─────────────────────────┘
```

[Fig. 10]

**RAPPORT DE RECHERCHE EUROPEENNE**

Numéro de la demande

EP 25 18 8348

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | JAE HYUN AHN ET AL: "Synchronized Aggregate Signatures: New Definitions, Constructions and Applications", IACR, INTERNATIONAL ASSOCIATION FOR CRYPTOLOGIC RESEARCH, vol. 20100730:035517, 29 juillet 2010 (2010-07-29), pages 1-26, XP061004552, * page 21 - page 24 * | 1-14 | INV. H04L9/30 H04L9/32 |
| A | WO 2019/152119 A1 (INTEL CORP [US]) 8 août 2019 (2019-08-08) * alinéa [0028] - alinéa [0090] * | 1-14 | |
| A | EP 2 437 427 A1 (NEC CORP [JP]) 4 avril 2012 (2012-04-04) * alinéa [0031] - alinéa [0083] * * figures 4-9 * | 1-14 | |
| T | "Network Functions Virtualisation (NFV); Trust; Report on Attestation Technologies and Practices for Secure Deployments", ETSI DRAFT; ETSI GR NFV-SEC 007, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG - NFV, no. V1.1.1 19 octobre 2017 (2017-10-19), pages 1-32, XP014320230, Extrait de l'Internet: URL:docbox.etsi.org\ISG\NFV\Open\Publicati ons_pdf\Specs-Reports\NFV-SEC 007v1.1.1 - GR - NFV Attestation report.pdf [extrait le 2017-10-19] * alinéa [0004] * | | **DOMAINES TECHNIQUES RECHERCHES (IPC)** H04L |

Le présent rapport a été établi pour toutes les revendications

| Lieu de la recherche | Date d'achèvement de la recherche | Examinateur |
|---|---|---|
| Munich | 3 novembre 2025 | Bec, Thierry |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 18 8348

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-11-2025

| Document brevet cité au rapport de recherche | Date de publication | Membre(s) de la famille de brevet(s) | Date de publication |
|---|---|---|---|
| WO 2019152119 A1 | 08-08-2019 | CN 111543029 A | 14-08-2020 |
| | | DE 112018007007 T5 | 12-11-2020 |
| | | US 2020366493 A1 | 19-11-2020 |
| | | WO 2019152119 A1 | 08-08-2019 |
| EP 2437427 A1 | 04-04-2012 | EP 2437427 A1 | 04-04-2012 |
| | | JP 5488596 B2 | 14-05-2014 |
| | | JP WO2010137508 A1 | 15-11-2012 |
| | | US 2012060028 A1 | 08-03-2012 |
| | | WO 2010137508 A1 | 02-12-2010 |

EPO FORM P0460

Pour tout renseignement concernant cette annexe : voir Journal Officiel de l'Office européen des brevets, No.12/82